Europäisches Patentamt

European Patent Office

Office européen des brevets

(19)

(11) Publication number: **0 061 266**
A1

(12) **EUROPEAN PATENT APPLICATION**

(21) Application number: **82301260.4**

(22) Date of filing: **12.03.82**

(51) Int. Cl.³: **C 08 J 7/00**
C 08 J 9/40, C 08 L 49/00
//(C08J7/00, C08K5/06, 5/13, 5/36)

(30) Priority: **23.03.81 US 246535**

(43) Date of publication of application:
**29.09.82 Bulletin 82/39**

(84) Designated Contracting States:
**AT BE CH DE FR GB IT LI NL SE**

(71) Applicant: **Rohm and Haas Company**
**Independence Mall West**
**Philadelphia, Pennsylvania 19105(US)**

(72) Inventor: **Myers, Robert Marshall**
**3139 Sheffield Place**
**Holland Pennsylvania 18966(US)**

(74) Representative: **Angell, David Whilton et al,**
**Rohm and Haas Company Patent Department**
**Chesterfield House Barter Street**
**London WC1A 2TP(GB)**

(54) Reducing doped polyacetylene crosslinking and embrittlement and compositions containing polyacetylene so treated.

(57) A process for reducing doped polyacetylene crosslinking and embrittlement comprises treating the polyacetylene with one or more of the following agents:
  (a) hindered phenols;
  (b) alkyl ethers of hydroquinone, wherein the alkyl groups have 1 to 12 carbon atoms; and
  (c) dialkyl thiodipropionates wherein each alkyl group has 1 to 18 carbon atoms and the alkyl groups in a single compound may be the same as or different from each other; so as to distribute the agent(s) through the polyacetylene.
  The polyacetylene must be doped before treatment which may be by simple immersion of the polyacetylene in pure protection agent, of a liquid, or a solution thereof. The treated polyacetylene has the protection agent(s) distributed therethrough.

EP 0 061 266 A1

## REDUCING DOPED POLYACETYLENE CROSSLINKING AND EMBRITTLEMENT, AND COMPOSITIONS CONTAINING POLYACETYLENE SO ꜛTREATED.

This invention is concerned with a process for reducing polyacetylene crosslinking and embrittlement and with compositions in which the polyacetylene has such properties.

Polyacetylene, its preparation and doping is described in U.S. Patents 4,204,216 and 4,222,903.

Polyacetylene has valuable electrical properties for a wide variety of uses, particularly when doped. However, a short time after doping, polyacetylene becomes brittle and its enhanced electrical conductivity properties diminish. The enhanced electrical conductivity of even doped polyacetylene powder soon decreases and the doped powder becomes less susceptible to forming into shaped articles. This conductivity decrease and embrittlement may be due to isomerization of cis-polyacetylene to trans-polyacetylene. Cis-polyacetylene is more flexible than trans-polyacetylene, but trans-polyacetylene has greater intrinsic electrical conductivity properties and is thermodynamically more stable. It is known that cis-polyacetylene, although generally considered stable at temperatures of from $-78^{\circ}$C. to $0^{\circ}$C., does isomerize slowly, even at $-78^{\circ}$C., to trans-polyacetylene. At temperatures above $0^{\circ}$C., this isomerization is accelerated. During this isomerization, free radicals are formed, whether the polyacetylene is doped or undoped, and these may crosslink or otherwise react with available oxygen. This is believed to contribute to embrittlement of, for example, a doped polyacetylene film by the formation of carbonyl and hydroxyl groups which also disrupt the conjugation of the polyacetylene double bonds and thereby decrease the conductivity. A discussion of these matters is given in Journal of Polymer Science, Volume 12, pages 11 to 20, Shirakawa, et al (1974).

As the free radical formation cannot be eliminated it would be advantageous to eliminate or reduce the presence, or effect, of free oxygen so that the result of the free radical formation would be reduced.

Embrittlement of a doped cis-polyacetylene film or other formed article can be delayed by storage at a low temperature ($-78^{\circ}$C. to $0^{\circ}$C.) under vacuum or under an inert gas such as nitrogen, argon or helium. This formed the basis for previous attempts to avoid embrittlement, by preparing cis-polyacetylene and storing it, whether doped or undoped, at such low temperatures under vacuum or inert gas. These procedures are cumbersome.

We have unexpectedly found that a certain small class of substances have greater affinity than doped polyacetylene for oxygen so that they can successfully compete with the doped polyacetylene for any oxygen present, even though they are not effective with undoped polyacetylene.

This invention provides a process for reducing doped polyacetylene crosslinking and embrittlement by treating it with one or more of the following agents:

(a) hindered phenols;

(b) alkyl ethers of hydroquinone wherein the alkyl groups have 1 to 12 carbon atoms; and

(c) dialkylthiodipropionates wherein each alkyl group has 1 to 18 carbon atoms and the alkyl groups in a single compound may be the same as or different from each other so as to distribute the agent(s) through the polyacetylene.

This invention is only applicable to the protection of doped polyacetylene, whether p-doped, n-doped or having a p-n junction, against crosslinking or embrittlement. The resulting composition comprises polyacetylene and, associated with said polyacetylene one or more of the protection agents (a), (b) and (c) above listed.

It is most surprising that these treatment agents are effective on doped polyacetylene since, as the comparative examples in our co-pending application No.81305841.9 dated 11th Dec.1981 demonstrates, agents from each of the categories (a), (b) and (c) are not effective in protecting undoped polyacetylene.

The doped polyacetylene which is to be protected may be in any shaped form but will usually be a powder, film or a foam-like material (hereinafter referred to as a foam.) The preparation of polyacetylene foams is described in Journal of Polymer Science; Polymer Letters Edition, Volume 17, pages 779-786, Wnek. Basically, polyacetylene foams may be prepared by polymerizing acetylene gas in the presence of a Ziegler-Natta type catalyst at concentrations that are less than normally employed when forming a film.  After the polyacetylene gel is obtained, solvent is removed under vacuum from the gel and the solvent is replaced with benzene.  The benzene in the gel is then frozen and the benzene is then sublimed to prepare the polyacetylene foam.

The protection agents (a), (b) and (c) may be either normally liquid or normally solid materials.  If the protection agent is normally a liquid, then the polyacetylene may be immersed in the protection agent itself for a long enough time to enable the agent to be absorbed adequately or otherwise associate itself with the doped polyacetylene.

If the protection agent is normally a solid, then it may be dissolved in a suitable solvent, by which we mean  a solvent which will not adversely affect the doped polyacetylene, for example by removing dopant therefrom.  Among suitable solvents are ethylene glycol, methyl alcohol, ethyl alcohol, dimethylsulfoxide, tetrahydrofuran, dimethylformamide, acetonitrile, glyme, diglyme, dimethyl acetamide, N-methyl pyrrolidone and sulfolane.

Even a normally liquid protecting agent may be dissolved in a suitable solvent, if it is desired to reduce the concentration at which it contacts the polyacetylene.

The concentration of the protection agent in the solvent may vary widely.  Generally, it may be preferred to have a high concentration to reduce the necessary treatment time so a concentration of at least 10% by weight of protection agent, based on the weight of the entire protection solution is generally appropriate; 20% by weight being convenient and 30% to 70% or more being usable.

The doped polyacetylene is generally contacted by immersion in the protection agents or solution thereof for 8 to 24 hours, the best contact time depending on the concentration of protection solution and the rate of diffusion of the protection agent into the polyacetylene, higher concentrations usually needing less contact time.

In the case of a 20%, by weight solution we have found a contact time for doped polyacetylene of 16 to 24 hours to be appropriate.

Contact between doped polyacetylene foam and the protection agent is preferably accomplished in a somewhat different manner than simple immersion. When the foam material is being prepared and after solvent has been removed from the polyacetylene gel, the solvent may be replaced with a sublimable liquid in which is dissolved the protection agent and the gel/liquid then may be allowed to stand. Thereafter, the sublimable liquid, such as benzene, is frozen and then sublimed. The resultant polyacetylene foam may then contain substantially all of the agent originally dissolved in the sublimable liquid. In this manner, greater amounts of protection agent may be associated with the polyacetylene foam than would be associated by simple immersion. The above technique may also be used when protecting polyacetylene film or powder which is sufficiently porous.

Among the useful hindered phenols are 4-dodecyloxy-2 hydroxybenzophenone; 2,6 di-t-butyl-4-methylphenol; octadecyl 3-(3,5-di-t-butyl-4-hydroxy-phenyl) propionate; nickel-bis[O-ethyl (3,5-di-t-butyl-4 hydroxybenzyl)]phosphonate and sulfur containing hindered phenols such as that sold by American Cyanamid Company under the trademark Cyanox 1729.

Suitable hydroquinone ethers include methyl, ethyl, propyl, butyl and 2-ethylhexyl ethers of hydroquinone.

Among the useful dialkylthiodipropionates are di-stearyl thiodipropionate, di-butyl thiodipropionate and di-decyl thiodipropionate.

It is surprising that the protection agents can be associated with polyacetylene as described herein and indeed the nature of this association is not understood. It is particularly surprising that this can be achieved without unacceptably interfering with the doping mechanism or effect. It is possible that the protection material is absorbed by the doped polyacetylene, while not interfering with the dopant, in such a way as to be an internal part of the doped polyacetylene particle or matrix.

The invention will now be illustrated by specific Examples. In these Examples, the initial conductivity is determined periodically over a period of about 1,000 hours. Conductivity is calculated from the method described in ASTM F 43, as applied to a polyacetylene film. The decay rate is determined from an empirical semi-logarithmic rate equation (similar to the Arrhenius equation).

The semiconductor lifetime, measured in years, is calculated from the aforementioned empirical equation by setting the conductivity of the doped and protected polyacetylene film equal to $10^{-7}$ $(ohm-cm)^{-1}$ (the lower limit of semiconductor conductivity) and solving for time, measured in years.

The halflife, measured in days, is determined using the equation:

Halflife = the natural logarithm of 0.5 divided by the decay rate obtained from the aforementioned empirical equation.

General Procedure for Examples

Protective solutions of 20% by weight of a protective material in tetrahydrofuran are made and an iodine doped polyacetylene film, containing approximately 50%, by weight, of iodine dopant, is immersed in protection solution for 24 hours. The film is then removed from the solution and dried in a dry nitrogen stream.

Samples are prepared by cutting the protected, doped polyacetylene into 1.27 cm. (0.5 in.) by 7.62 cm. (3 in.) strips. Two 1.27 cm. (0.5 in.) wide aluminum foil strips are each separately attached, using conducting silver paste, to an end of the protected, doped polyacetylene in a manner such as to leave an area measuring one inch by one-half inch of the protected, doped polyacetylene, free of the aluminum foil. Each of both ends of the polyacetylene film thus has a separate strip of aluminum foil. The samples are encased in clear adhesive tape with the aluminum foil strips extending beyond the tape on both ends of the film. The samples are then connected to a Keithley 530 "TYPE-ALL" system and conductivity is measured at very low currents (10 to 100 microamps). A control which is not treated with a protective material is also prepared and tested as set forth above. The aforedescribed calculations are then made. The results are given in the table.

TABLE

| Protection Agent | Initial Conductivity $10^{-3}(OHm-Cm)^{-1}$ | Decay Rate $10^{-3}$/hour | Semiconductor lifetime-years | Semiconductor half life-days |
|---|---|---|---|---|
| A hindered phenol with sulfur (Cyanox 1729-American Cyanamid Company) | 73 | 2.85 | 0.54 | 10 |
| Nickel-bis [O-ethyl (3,5-di-t-butyl-4-hydroxy-benzyl)] phosphonate | 70 | 3.13 | 0.49 | 9.2 |
| Octadecyl-,3-(3,5-di-t-butyl-4-hydroxyphenyl) propionate | 200 | 4.36 | 0.38 | 6.6 |
| 2,6-di-t-butyl-4 methylphenol | 220 | 4.43 | 0.38 | 6.5 |
| monomethyl ether of hydroquinone | 200 | 4.56 | 0.36 | 6.3 |
| 4-dodecyloxy-2-hydroxybenzophenone | 87 | 4.62 | 0.34 | 6.2 |
| di-stearyl thiodipropionate | 9.6 | 5.29 | 0.25 | 5.4 |
| Control (no protective material) | 23 | 7.22 | 0.19 | 4.0 |

0061266

CLAIMS:

1. A process for reducing doped polyacetylene crosslinking and embrittlement comprising treating the doped polyacetylene with one or more of the following agents:

   (a) hindered phenols;

   (b) alkyl ethers of hydroquinone, wherein the alkyl groups have 1 to 12 carbon atoms; and

   (c) dialkyl thiodipropionates wherein each alkyl group has 1 to 18 carbon atoms and the alkyl groups in a single compound may be the same as or different from each other; so as to distribute the agent(s) through the polyacetylene.

2. A process according to claim 1 wherein the polyacetylene is p-doped, n-doped or has a p-n junction.

3. A process according to claim 1 or 2 wherein the protection agent material is used in an at least 10%, by weight, solution in a solvent.

4. A process according to any preceding claim wherein the polyacetylene is in the form of a film, a powder or a foam.

5. A process according to any preceding claim wherein the polyacetylene is contacted with the protection agent for 8 to 24 hours or until the polyacetylene no longer absorbs further protection agent.

6. A process according to any preceding claim wherein the protection agent is the methyl ether of hydroquinone, nickel-bis [O-ethyl(3,5-di-t-butyl-4- hydroxybenzyl)] phosphonate, 4-dodecyloxy-2 hydroxybenzophenone, 2,6-di-t-butyl-4-methylphenol, octadecyl-3-(3,5-di-t-butyl-4 hydroxyphenyl) propionate and/or distearyl thiodipropionate.

7. A composition comprising doped polyacetylene and, distributed therethrough, one or more of the following:

   (a) hindered phenols;

   (b) alkyl ethers of hydroquinone wherein the alkyl groups have 1 to 12 carbon atoms; and

   (c) dialkylthiodipropionates wherein each alkyl group has 1 to 18 carbon atoms and the alkyl groups in a single compound may be the same as or different from each other.

European Patent
Office

**0061266**
Application number

**EUROPEAN SEARCH REPORT**

EP 82301260.4

## DOCUMENTS CONSIDERED TO BE RELEVANT

| Category | Citation of document with indication, where appropriate, of relevant passages | Relevant to claim |
|---|---|---|
| A | EP - A1 - 0 022 271 (JAP. SYNTH. RUBBER) (14-01-1981)<br>* Abstract *<br><br>-- | 1,7 |
| A | US - A - 4 228 060 (PEZ) (14-10-1980)<br>* Claim 1; column 10, lines 13-17 *<br><br>---- | 1,7 |

**CLASSIFICATION OF THE APPLICATION (Int. Cl. ³)**

C 08 J  7/00
C 08 J  9/40
C 08 L 49/00//
(C 08 J  7/00
C 08 K  5/06
C 08 K  5/13
C 08 K  5/36)

**TECHNICAL FIELDS SEARCHED (Int.Cl. ³)**

C 08 J
C 08 L 49/00
C 08 K

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search<br>VIENNA | Date of completion of the search<br>03-06-1982 | Examiner<br>WEIGERSTORFER | |

EPO Form 1503.1  06.78